# EUROPÄISCHE PATENTSCHRIFT

(11) **EP 1 914 949 B1**
(45) Veröffentlichungstag und Bekanntmachung des Hinweises auf die Patenterteilung: **05.09.2018**
(21) Anmeldenummer: 07018506.1
(22) Anmeldetag: 20.09.2007
(51) Int. Cl.: H04L 27/00

(54) **Verfahren zur Analyse eines digital modulierten Signals und Signalanalysevorrichtung**
Method for analysing a digitally modulated signal and signal analysis device
Procédé d'analyse d'un signal modulé numériquement et dispositif d'analyse de signal

(30) Priorität: 19.10.2006 DE 102006049360
(43) Veröffentlichungstag der Anmeldung: 23.04.2008
(73) Patentinhaber: Rohde & Schwarz GmbH & Co. KG, 81671 München (DE)
(72) Erfinder: Kühne, Jens, 85560 Ebersberg (DE)
(74) Vertreter: Beder, Jens

(56) Entgegenhaltungen:
- US-A- 4 597 107
- US-B1- 6 240 282
- LÓPEZ-RISUEÑO G ET AL: "Atomic decomposition-based radar complex signal interception - Time-frequency analysis for synthetic aperture radar and feature extraction", IEE PROCEEDINGS: RADAR, SONAR & NAVIGATION, INSTITUTION OF ELECTRICAL ENGINEERS, GB, Bd. 150, Nr. 4, 1. August 2003 (2003-08-01), Seiten 323-331, XP006021035, ISSN: 1350-2395, DOI: 10.1049/IP-RSN:20030680
- NAGY P A J ED - INSTITUTE OF ELECTRICAL AND ELECTRONICS ENGINEERS: "A MODULATION CLASSIFIER FOR MULTI CHANNEL SYSTEMS AND MULTI TRANSMITTER SITUATIONS", PROCEEDINGS OF THE MILITARY COMMUNICATIONS CONFERENCE (MILCOM). LONG BRANCH, NJ., OCT. 2 - 5, 1994; [PROCEEDINGS OF THE MILITARY COMMUNICATIONS CONFERENCE (MILCOM)], NEW YORK, IEEE, US, Bd. 3 OF 03, 2. Oktober 1994 (1994-10-02), Seiten 816-820, XP000505981, ISBN: 978-0-7803-1829-8

## Beschreibung

Die Erfindung betrifft ein Verfahren zur Analyse eines digital modulierten Signals und eine Signalanalysevorrichtung.

Zum technologischen Hintergrund wird auf die US 6,690,746

B1 verwiesen, in der vorgeschlagen wird, einen Signalklassifikator zu verwenden, der mehrere Module enthält. Diese einzelnen Module sind verschiedenen Modulationsarten zugeordnet, so dass jedes der Module das ankommende Signal ausschließlich im Hinblick auf diese Modulationsart auswertet. Die zur Demodulation eines eingehenden Signals erforderlichen Parameter werden dabei innerhalb eines jeden Moduls aus dem unbekannten Eingangssignal ermittelt.

Verfahren zur Analyse von digital modulierten Signalen sind außerdem bekannt aus LÓPEZ-RISUEÑO G ET AL: "Atomic decomposition-based radar complex signal interception", IEE PROCEEDINGS: RADAR, SONAR & NAVIGATION, GB, Bd. 150, Nr. 4, 1. August 2003, Seiten 323-331, ISSN: 1350-2395, NAGY P A J ED - INSTITUTE OF ELECTRICAL AND ELECTRONICS ENGINEERS: "A MODULATION CLASSIFIER FOR MULTI CHANNEL SYSTEMS AND MULTI TRANSMITTER SITUATIONS", PROCEEDINGS OF THE MILITARY COMMUNICATIONS CONFERENCE (MILCOM). LONG BRANCH, NJ., OCT. 2 - 5, 1994; NEW YORK, IEEE, US, Bd. 3 OF 03, 2. Oktober 1994, Seiten 816-820, ISBN: 978-0-7803-1829-8, US 6 240 282 B1 sowie US 4 597 107 A. Bei der Analyse von digital modulierten Signalen werden Signale unbekannter Modulationsart einem Analysator zugeführt. Dieses unbekannte Signal umfasst auch solche Signalanteile, welche für eine Modulationsartenanalyse nicht erforderlich sind oder dieser sogar hinderlich sind. Überlicherweise wird eine Modulationsartenerkennung durch einen geeigneten Klassifikatoralgorithmus durchgeführt. Diesem Klassifikatoralgorithmus wird das empfangene Signal zugeführt, woraufhin aus dem empfangenen Signal automatisch Modulationsparameter ermittelt werden. Unabhängig von dem zugeführten Signal wird dabei ein automatisierter Analyseablauf durchlaufen. Die starre Vorgabe von Analysealgorithmen kann daher lediglich einen Kompromiss für die Gesamtheit der möglichen Eingangssignale darstellen. Insbesondere ist es auch nicht möglich, während des Verfahrensablaufs eine Überprüfung der Qualität durchgeführter Verfahrensschritte vorzunehmen. Eine solche Überprüfung der Qualität des Ergebnisses ist erst anhand des Ergebnisses der gesamten Modulationsparameteranalyse möglich.

Es ist daher die Aufgabe der Erfindung, ein Analyse-Verfahren sowie ein Computerprogramm und eine Signalanalysevorrichtung zur Verbesserung der Modulationsparameteranalyse und eine Signalanalysevorrichtung zu schaffen, bei dem ein variabler Ablauf der Analyse nach dem Einlesen eines Signals möglich ist.

Die Aufgabe wird durch das Verfahren zur Analyse eines digital modulierten Signals nach Anspruch 1, die Signalanalysevorrichtung nach Anspruch 20 sowie das Computerprogrammprodukt und das Computerprogramm nach den Ansprüchen 16 bis 19 gelöst.

In den Unteransprüchen sind vorteilhafte Weiterbildungen des erfindungsgemäßen Verfahrens sowie des erfindungsgemäßen Signalanalysevorrichtung ausgeführt.

Bei dem erfindungsgemäßen Verfahren zur Analyse eines digital modulierten Signals wird zunächst ein Signal durch die Signalanalysevorrichtung eingelesen. Aus diesem Signal werden Signaldaten als Funktion einer physikalischen Größe ermittelt, z. B. der Zeit oder der Frequenz. Diese Signaldaten werden zur externen Analyse über eine Schnittstelle ausgegeben. An einer Eingangsschnittstelle wird abgefragt, ob eine externe Analyse durchgeführt wird. Sofern eine externe Analyse der Signaldaten durchgeführt wird, werden externe Reduktionsparameter eingelesen. Wird dagegen keine externe Analyse durchgeführt, so werden interne Reduktionsparameter eingelesen. Auf Basis dieser Reduktionsparameter wird ein Reduktionsschritt in einer von mehreren Reduktionsstufen durchgeführt, mit dem solche Signalanteile des zu analysierenden Signals entfernt werden, welche zur Modulationsanalyse bzw. zur Bestimmung der Modulationsparameter nicht erforderlich sind. Nachdem das zu analysierende Signal in einem Reduktionsschritt von einem Teil der nicht relevanten Signalanteile befreit wurde, wird dieses reduzierte Signal einer Bewertungsroutine übergeben. Die Bewertungsroutine liefert ein Bewertungsergebnis zurück, wobei diese zurückgelieferte Bewertungsergebnis durch eine Weiterleitungsentscheidungsvorrichtung eingelesen wird, durch die in Abhängigkeit von dem Bewertungsergebnis eine Wiederholung des Reduktionsschritts mit veränderten Parametern veranlasst wird oder aber das reduzierte Signal zur Reduktion weiterer, nicht relevanter Signalanteile an weitere Reduktionsstufen weitergeleitet wird.

Das erfindungsgemäße Verfahren und die Signalanlysevorrichtung hat den Vorteil, dass in mehreren Schritten das zu analysierende Signal von nicht relevanten Signalanteilen befreit wird. Dabei stehen nicht nur interne Reduktionsparameter zur Verfügung, sondern aus dem zu analysierenden Signal werden auch Signaldaten als Funktion einer vorgebbaren physikalischen Größe erzeugt, die dann in einer externen Analyse ausgewertet werden. Diese externe Analyse kann beispielsweise unter Zuhilfenahme von bekannten Signaleigenschaften oder Vorkenntnissen über den Signaltyp optimiert sein. Die von der externen Analyseroutine gelieferten Reduktionsparameter werden dann wiederum auf das zu analysierende Signal angewendet. Neben der Fähigkeit, eine vorgefertigte Analyse bei dem ankommenden, zu analysierenden Signal durchzuführen, ist das erfindungsgemäße Verfahren daher in der Lage, alternativ externe, optimierte Analysealgorithmen zu berücksichtigen, indem ein entsprechend vorbereitetes Signal bzw. die Signaldaten ausgegeben und im Anschluss daran extern ermittelte Reduktionsparameter eingelesen werden.

Aufgrund der zusätzlichen inneren Analyseroutine kann bei Fehlen einer externen Analyseroutine dennoch eine Reduktion des zu analysierenden Signals durchgeführt werden. Das Verfahren liest dann interne Reduktionsparameter ein und reduziert das zu analysierende Signal durch Filterung. Zudem wird vor der Weiterverarbeitung des in dem Reduktionsschritt reduzierten Signals eine Bewertung der Qualität des Teilergebnisses durchgeführt. Diese Bewertung kann durch eine Weiterleitungsentscheidungsvorrichtung nach der Ausgabe des reduzierten Signals durch eine externe Bewertungsroutine oder intern durchgeführt werden. Das Ergebnis dieser Bewertung wird wiederum eingelesen und in Abhängigkeit von dem eingelesenen Bewertungsergebnis das reduzierte Signal zur weiteren Verarbeitung weitergeleitet. Die weitere Verarbeitung umfasst dabei zumindest einen weiteren Reduktionsschritt in einer weiteren Reduktionsstufe.

Das erfindungsgemäße Verfahren hat den Vorteil, dass durch eine Segmentierung in verschiedenen Reduktionsschritten eine sukzessive Befreiung des zu analysierenden Signals von nicht relevanten Signalanteilen erfolgt. Die Segmentierung erfolgt in den einzelnen Reduktionsstufen im Hinblick auf die jeweils zur Erzeugung der Signaldaten gewählte physikalische Größe. Dabei kann entweder in interner Algorithmus zum Einsatz kommen oder aber für jede dieser Reduktionsschritte eine angepasste, externe Analyseroutine verwendet werden. Diese angepasste, externe Analyseroutine kann beispielsweise in einem Speicher der Analysevorrichtung abgelegt sein, der mit einer Reduktionseinheit verbunden ist. Alternativ können auch Routinen außerhalb der Signalanalysevorrichtung verwendet werden. Die Signalanalyse gibt hierzu die Signaldaten an einer Geräteschnittstelle aus und liest an der Geräteschnittstelle die zurückgelieferten Daten ein. Die Reduktionseinheit, die zur Durchführung der einzelnen Reduktionsschritte vorgesehen ist, kann bei der Durchführung der einzelnen Reduktionsschritte dabei auf die Analyseroutine, die in dem Speicher abgelegt sind, zugreifen. Alternativ kann die Ausgabe der Signaldaten auch in graphischer Form erfolgen, wobei die Reduktionsparameter über eine Schnittstelle der Analysevorrichtung eingegeben werden.

Insbesondere ist es vorteilhaft, bei mehreren aufeinander folgenden Reduktionsschritten jeweils auf Basis des weitergeleiteten reduzierten Signals die Signaldaten als Funktion einer vorgebbaren physikalischen Größe zu erzeugen. Damit wird sichergestellt, dass zur Ermittlung der weiteren Reduktionsparameter für nachfolgende Reduktionsschritte jeweils das Ergebnis des vorangegangenen Reduktionsschritts berücksichtigt wird.

Weiterhin ist es vorteilhaft, zumindest in einem weiteren Reduktionsschritt Signaldaten zur externen Analyse auszugeben. Damit können unterschiedliche externe Analyseroutinen mit jeweils einem Reduktionsschritt zusammenwirken, wobei individuelle Analyseroutinen eingesetzt werden, die zum Beispiel auf unterschiedlichen Informationen über das zu analysierenden Signal beruhen. Dabei können insbesondere bei der Auswahl der externen Analyseroutine bereits Informationen aus den vorangegangenen Reduktionsschritten berücksichtigt werden.

Gemäß einer weiteren bevorzugten Ausführungsform sind die internen Reduktionsparameter für mehrere nacheinander durchzuführende Reduktionsschritte als Parametersatz vorgegeben und in einem Speicher abgelegt. Die Vorgabe von Reduktionsparametern für mehrere nacheinander durchzuführende Reduktionsschritte hat den Vorteil, dass auch bei vollständigem Fehlen einer externen Analyseroutine eine Modulationsparameteranalyse an dem zu analysierenden Signal durchgeführt werden kann, das von nicht relevanten Signalanteilen befreit wurde. In diesem Fall wird in jedem einzelnen Reduktionsschritt festgestellt, dass eine externe Analyse nicht erfolgt. Es wird dann jeweils auf interne Reduktionsparameter zurückgegriffen, welche a priori als vollständiger Parametersatz in der Signalanalysevorrichtung abgespeichert sind.

Weiterhin ist es vorteilhaft, zumindest eine interne Analyseroutine vorzusehen, mit der ausgehend von den Signaldaten zumindest ein Reduktionsparameter für den nachfolgenden Reduktionsschritt ermittelt wird.

Gemäß einer weiteren bevorzugten Ausführungsform wird ausgehend von einer Typinformation über das zu analysierende Signal festgelegt, welche Reduktionsschritte nacheinander durchzuführen sind. Es existiert hierzu eine Gesamtheit unterschiedlicher Reduktionsstufen in einer Reduktionseinheit, die miteinander kombiniert werden können. Dabei kann eine Untermenge gewählt werden und eine Reihenfolge zur Durchführung festgelegt werden.

Weiterhin ist es vorteilhaft, ausgehend von einer vordefinierten Reihenfolge in Abhängigkeit von einer Vorverarbeitung des zu analysierenden Signals eine Reihenfolge bei der Durchführung mehrerer Reduktionsschritte ändern zu können. So kann beispielsweise bei einer Reduktion von nicht relevanten Frequenzanteilen verhindert werden, dass nach einer Vorfilterung beispielsweise durch ein dem Signaleingang nachgeschaltetes Bandpassfilter unmittelbar im Anschluss als Reduktion weitere Frequenzbereiche ausgeblendet werden. Es ist dann sinnvoller, zunächst eine Reduktion im Zeitbereich durchzuführen, bevor dann als nachfolgender Reduktionsschritt eine verfeinerte Reduktion im Frequenzbereich durchgeführt wird. Durch das Tauschen der Reduktionsschritte kann damit eine Optimierung des letztlich einem Analyseabschnitt zuzuführenden Signals erreicht werden, wenn eine entsprechende Information über eine Vorverarbeitung vorliegt.

Als Reduktionsschritte werden vorzugsweise eine Frequenzsegmentierung und/oder eine Zeitsegmentierung durchgeführt. In einem weiteren Reduktionsschritt kann eine Sekundärmodulation rückgängig gemacht werden.

Nach der Durchführung der einzelnen Reduktionsschritte wird das so erzeugte reduzierte Signal vorzugsweise einem Analyseabschnitt übergeben, in dem die Bestimmung von Modulationsparametern und damit der durchgeführten Modulation erfolgt. Das zu analysierende Signal hat bereits mehrere Reduktionsstufen absolviert und wurde dabei auf seine wesentlichen Bestandteile reduziert, die eine exakte Bestimmung der Modulationsparameter erlaubt. Die Modulationsparameteranalyse umfasst ihrerseits zumindest zwei Analyseschritte, die jeweils ein Teilergebnis auf Basis zumindest eines Analyseparameters ermitteln.

Gemäß einer alternativen Ausführungsform wird anstelle einer Modulationsparameteranalyse eine Korrelationsanalyse des reduzieren Signals durchgeführt. Dabei werden vorzugsweise Spektren höherer Momente ermittelt.

In der Zeichnung ist eine bevorzugte Ausführungsform des erfindungsgemäßen Verfahrens sowie der erfindungsgemäßen Signalanalysevorrichtung dargestellt. Es zeigen:
- Fig. 1: ein Blockschaltbild einer erfindungsgemäßen Signalanalysevorrichtung;
- Fig. 2: eine schematische Darstellung zum Ablauf eines Reduktionsschritts; und
- Fig. 3: eine beispielhafte graphische Ausgabe während der Durchführung des Verfahrens.

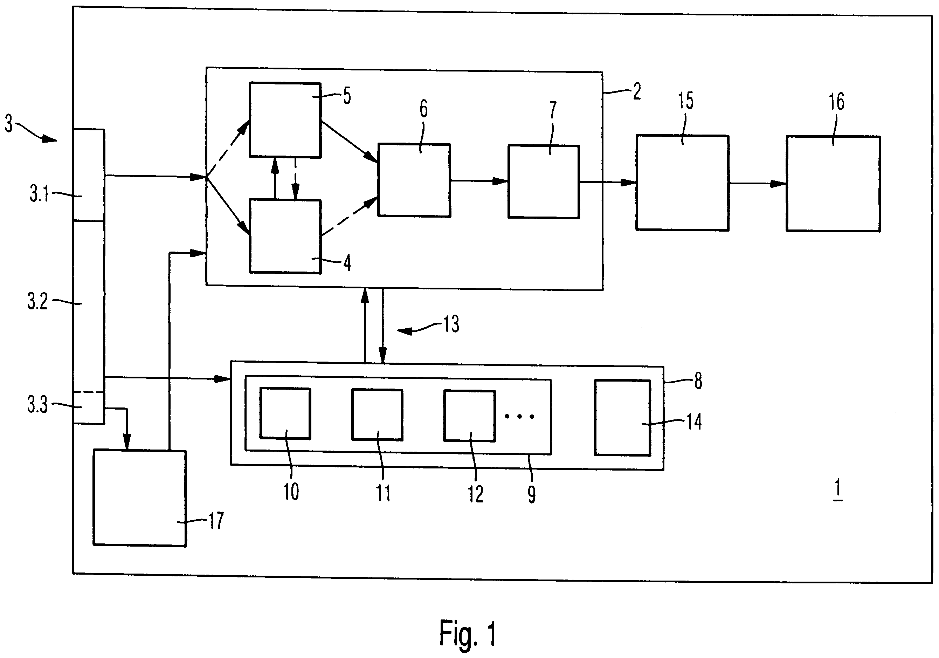

In der Fig. 1 ist eine erfindungsgemäße Signalanalysevorrichtung 1 gezeigt. Die Signalanalysevorrichtung 1 umfasst eine Reduktionseinheit 2. Die Reduktionseinheit 2 ist mit einer Schnittstelle 3 verbunden. Die Schnittstelle 3 umfasst einen Signaleingang 3.1, über den ein zu analysierendes Signal zugeführt wird.

In der Reduktionseinheit 2 sind mehrere Reduktionsstufen 4, 5, 6 und 7 vorgesehen. Durch einen Auswahlabschnitt 17, der mit der Reduktionseinheit 2 verbunden ist, erfolgt eine Auswahl der durchzuführenden Reduktionsschritte und eine Festlegung einer Reihenfolge. Der Auswahlabschnitt 17 ist ebenfalls mit der Eingabeschnittstelle 3 verbunden, die einen Signalinformationseingang 3.3 aufweist. Über den Signalinformationseingang 3.3, der durch den Auswahlabschnitt 17 ausgelesen wird, können Informationen über das über den Signaleingang 3.1 zugeführte Signal mitgeteilt werden. Liegen solche Informationen beispielsweise über einen Signaltyp oder eine Vorverarbeitung in dem Auswahlabschnitt 17 vor, so wird auf Basis dieser Informationen eine besonders effiziente Zusammenstellung der Reduktionsstufen 4 bis 7 oder eines Teils hiervon vorgenommen.

In dem dargestellten Ausführungsbeispiel sind die Reduktionsstufen 4 und 5 übereinander angeordnet. Damit wird angedeutet, dass die Reihenfolge der Reduktionsstufen durch den Auswahlabschnitt 17 vorgegeben werden kann. So kann, wie es durch die durchgezogenen Pfeile angedeutet ist, zunächst das zu analysierende Signal der ersten Reduktionsstufe 4 und dann der zweiten Reduktionsstufe 5 zugeführt werden, bevor es der dritten Reduktionsstufe 6 und anschließend der vierten Reduktionsstufe 7 zugeführt wird. So wird beispielsweise in der ersten Reduktionsstufe 4 eine Frequenzsegmentierung durchgeführt, bei der diejenigen Frequenzanteile, die das zu analysierende Signal enthält, die jedoch nicht für eine spätere Bestimmung von Modulationsparametern erforderlich sind, entfernt werden. Anschließend wird eine Zeitsegmentierung in der zweiten Reduktionsstufe 5 durchgeführt. Die dritte Reduktionsstufe 6 kann beispielsweise eine Inbandfilterung sein, bevor das so bereits dreifach, jeweils im Hinblick auf unterschiedliche physikalische Größen reduzierte Signal zu der vierten Reduktionsstufe 7 weitergeleitet wird, in der beispielsweise eine Sekundärmodulation rückgängig gemacht wird.

Wird bezüglich des zu analysierenden Signals, das über den Signaleingang 3.1 zugeführt wird, über den Signalinformationseingang 3.3 eine Information über eine Vorverarbeitung des Signals geliefert, so wird z. B. die Reihenfolge der ersten Reduktionsstufe 4 und der zweiten Reduktionsstufe 5 getauscht. Wenn die erste Reduktionsstufe 4 eine Frequenzsegmentierung bewirkt und die zweite Reduktionsstufe eine Zeitsegmentierung, so wird die Frequenzsegmentierung hierbei nach der Zeitsegmentierung durchgeführt. Eine Vorverarbeitung kann beispielsweise bei einer Vorfilterung des zu analysierenden Signals vorliegen. Um zu verhindern, dass das gerade durch einen Frequenzfilter beschnittene ankommende Signal unmittelbar in dem ersten Reduktionsschritt wiederum einer Frequenzsegmentierung zugeführt wird, wird in diesem Fall die zweite Reduktionsstufe 5 zuerst durchlaufen, bevor das so reduzierte Signal der ersten Reduktionsstufe 4 zugeführt wird. Dies ist durch den Verlauf der gestrichelten Pfeile in der Fig. 1 dargestellt. In diesem Fall wird ein ohnehin hinsichtlich des Frequenzspektrums reduziertes, bereits eingangsseitig vorliegendes Signal zunächst in der zweiten Reduktionsstufe 5 im Zeitbereich durch Filterung von nicht relevanten Signalanteilen befreit, bevor in der nachfolgenden Durchführung des Reduktionsschritts der ersten Reduktionsstufe 4 eine verfeinerte Frequenzsegmentierung durchgeführt wird. Nach dem Durchlaufen der mehreren Reduktionsstufen 4 bis 7 wird das reduzierte Signal von der Reduktionseinheit 2 ausgegeben und einer Analyseeinrichtung 15 übergeben. In der Analyseeinrichtung 15 werden Modulationsparameter aus dem reduzierten Signal bestimmt und anschließend das Ergebnis über einen Ausgabeabschnitt 16 ausgegeben.

Bei der Durchführung der einzelnen Reduktionsschritte in den Reduktionsstufen 4 bis 7 kann entweder ein automatischer Durchlauf sämtlicher Reduktionsstufen erfolgen oder aber in jeder Reduktionsstufe 4, 5, 6 und 7 wird zunächst das zugeführte Signal aufbereitet und es werden Signaldaten als Funktion einer physikalischen Größe zur Verarbeitung in der Reduktionsstufe 4 bis 7 erzeugt. Diese Signaldaten werden bei der Verwendung von geräteeigenen Analyseroutinen über eine interne Schnittstelle 13 ausgegeben, so dass eine Analyse der Signaldaten durch eine externe Analyseroutine erfolgen kann. Mehrer dieser Analyseroutinen sind in der Fig. 1 beispielhaft mit den Bezugszeichen 10 bis 12 dargestellt. Diese Analyseroutinen 10 bis 12 sind Bestandteil eines Analyseblocks 9 zur externen Analyse , der in einem Speicher 8 der Signalanalysevorrichtung 1 gespeichert ist. Zusätzlich sind in dem Speicher 8 interne Reduktionsparameter 14 gespeichert, die durch die Reduktionseinheit 2 eingelesen werden können.

Die Analyseroutinen 10 bis 12 können über eine allgemeine Schnittstelle 3.2 in dem Speicher 8 gelöscht oder aber neue Analyseroutinen als Ersatz abgespeichert werden. Als Schnittstelle kann auch die allgemeine Schnittstelle 3.2 verwendet werden. Insbesondere kann dann auch eine oder mehrere der externen Analyseroutinen durch einen Bediener durchgeführt werden, der die externen Reduktionsparameter durch Eingabemittel wie Tastatur oder Computermaus übergibt.

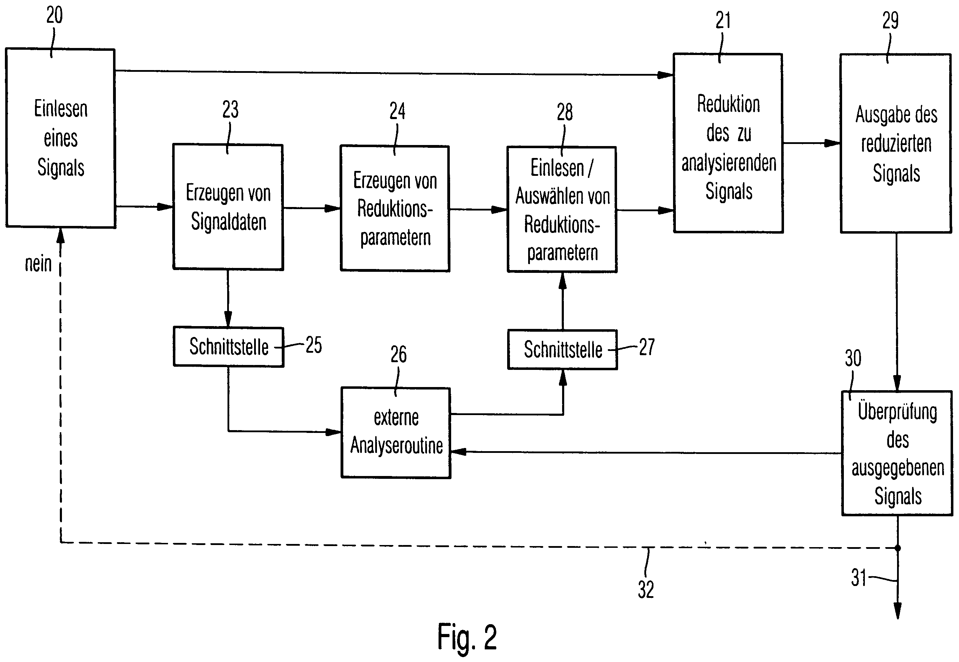

Die Vorgehensweise bei der stufenweisen Reduktion des zu analysierenden Signals wird nachfolgend unter Bezugnahme auf Fig. 2 erläutert. Die Fig. 2 zeigt den Ablauf innerhalb einer Reduktionsstufe 4 bis 7 beispielhaft auf.

Zunächst wird in Schritt 20 ein Signal über den Signaleingang 3.1 eingelesen. Sofern es sich um die Reduktionsstufe 4 für den ersten durchzuführenden Reduktionsschritt handelt, wird in Schritt 20 folglich das über den Signaleingang 3.1 zugeführte zu analysierende Signal eingelesen. Für die nachfolgende Erläuterung sei angenommen, dass ein ankommendes Signal einer ersten Bandbreite auf eine geringere zweite Bandbreite um eine bestimmte Mittenfrequenz herum durch Filterung reduziert werden soll. Hierzu werden in Schritt 23 zunächst Signaldaten auf Basis einer bestimmten physikalischen Größe in einem Datenerzeugungsabschnitt der ersten Reduktionsstufe 4 erzeugt. Im Beispiel einer Frequenzsegmentierung wird hierzu zunächst ein Spektrum oder ein Spektrogramm aus dem ursprünglichen Signal berechnet. Um das Entfernen der nicht relevanten Frequenzanteile des Signals durchführen zu können, muss einerseits die Mittenfrequenz und andererseits die Bandbreite als Reduktionsspeicher festgelegt werden, so dass die irrelevanten Frequenzbereiche des Signals dann durch Filterung entfernt werden können.

Die Mittenfrequenz und die Bandbreite sind somit die Reduktionsparameter für die durchzuführende Frequenzsegmentierung in der ersten Reduktionsstufe. Diese Reduktionsparameter werden als interne Reduktionsparameter in der ersten Reduktionsstufe 4 in Schritt 24 durch einen Ermittlungsabschnitt der Reduktionsstufe 4 erzeugt. Hierzu kann beispielsweise eine Mustererkennung der erzeugten Signaldaten durchgeführt werden. Diese innere Routine, die in Schritt 24 die internen Reduktionsparameter erzeugt, wird für jedes eingelesene Signal gleichermaßen ausgeführt. Bei einer Musterkennung werden beispielsweise automatisch charakteristische Signaldatenverläufe des Spektrums oder Spektrogramms im Falle einer Frequenzsegmentierung erkannt und an den charakteristischen Punkten der Frequenzbereich begrenzt bzw. die Mittelfrequenz definiert.

Um eine besser angepasste Erzeugung der Reduktionsparameter zu ermöglichen, ist ferner eine Schnittstelle 25 vorgesehen, über die die Signaldaten ausgegeben werden. Die Signaldaten werden über die Schnittstelle 25 einer externen Analyseroutine 10 - 12 zur Verfügung gestellt. Die externe Analyseroutine 10 - 12, die in Schritt 26 ausgeführt wird, kann beispielsweise ein zusätzliches Computerprogramm der Signalanalysevorrichtung 1 sein, das in einem zentralen Rechenabschnitt der Signalanalysevorrichtung 1 ausgeführt wird. Die externe Analyseroutine kann auch gerätefremd durchgeführt werden. Ein Austausch der Analyseroutine gegen eine andere externe Analyseroutine ist in jedem Fall durch die Übergabe der Signaldaten an der Schnittstelle 25 unabhängig von dem eigentlichen Verfahrensablauf innerhalb der ersten Reduktionsstufe 4. Bei einer gerätefremden externen Analyseroutine werden die Signaldaten über die allgemeine Schnittstelle 3.2 ausgegeben und die Reduktionsparameter von dort eingelesen.

In Schritt 26 wird durch die externe Analyseroutine 10 - 12 der zumindest eine Reduktionsparameter erzeugt, der zur Durchführung der Frequenzsegmentierung in dem ersten Reduktionsschritt erforderlich ist. Dieser Reduktionsparameter oder diese Reduktionsparameter werden über die Schnittstelle 27 an die erste Reduktionsstufe 4 zurückgeliefert. In Schritt 28 wird durch die erste Reduktionsstufe 4 der bzw. die Reduktionsparameter eingelesen. Liegt dabei an der Schnittstelle 27 ein Reduktionsparameter oder ein Satz von Reduktionsparametern für die Durchführung des Reduktionsschritts an, so wird dieser Reduktionsparameter ausgewählt. Liegt an der Schnittstelle 27 dagegen kein Parametersatz vor, so wird auf die internen Reduktionsparameter zurückgegriffen und die anschließende Reduktion mit diesen Parametern durchgeführt.

Auf die geräteinternen Reduktionsparameter kann beispielsweise nach einer definierten Wartezeit nach Ausgabe der Signaldaten oder aber nach Eingabe einer Information über das Fehlen der externen Analyseroutine zurückgegriffen werden.

Nachdem die Reduktionsparameter zur Durchführung des Reduktionsschritts aus Schritt 28 bekannt sind, wird auf Basis dieser Reduktionsparameter die Reduktion des eingelesenen Signals durchgeführt. In dem Beispiel der ersten Reduktionsstufe, durch die eine Frequenzsegmentierung durchgeführt wird, wird folglich eine Mittenfrequenz in dem eingelesenen Signal ausgewählt und entsprechend der eingestellten Bandbreite eine Bandpassfilterung des Signals durchgeführt. Nach dem Schritt 21 wird das so erzeugte reduzierte Signal ausgegeben. Nach der Ausgabe in Schritt 29 wird eine Überprüfung des reduzierten Signals durchgeführt. Als Ergebnis der Überprüfung des ausgegebenen Signals liegt ein Bewertungsergebnis vor, das in die Reduktionseinrichtung 2 eingelesen wird. Gemäß dieses Bewertungsergebnisses ist entweder die Reduzierung des zu analysierenden Signals erfolgreich gewesen und eine Weiterverarbeitung kann erfolgen oder die Überprüfung des ausgegebenen Signals ergibt, dass die Reduzierung nicht ausreichend gut war. In diesem Fall wird das negative Bewertungsergebnis der externen Analyseroutine durch eine Weiterverarbeitungsentscheidungsvorrichtung zurückgemeldet, die ausgehend von den über die Schnittstelle 25 eingelesenen Signaldaten und der Bewertung des ausgegebenen Signals neue Reduktionsparameter erzeugt. Diese neuen Reduktionsparameter werden an die Schnittstelle 27 übergeben und durch die Reduktionsstufe 4 eingelesen. Es erfolgt eine neuerliche Reduktion mit den veränderten Reduktionsparametern auf Basis des ursprünglich eingelesenen Signals aus Schritt 20. Die Bewertung und das Erzeugen des Bewertungsparameters kann extern oder intern erfolgen. Bei einer positiven Bewertung wird das reduzierte Signal dagegen durch die Weiterverarbeitungsentscheidungsvorrichtung an den nächsten Bearbeitungsschnitt weitergeleitet.

Somit kann mit jeder Überprüfung durch das Erzeugen eines entsprechenden Bewertungsergebnisses sichergestellt werden, dass nur bei einer qualitativ ausreichenden Reduktion das reduzierte Signal dem nächsten Reduktionsschritt übergeben wird. Die Übergabe zu dem nächsten Reduktionsschritt ist in der Fig. 2 schematisch durch den gestrichelt dargestellten Pfeil 32 angedeutet. In dem Schritt 20 wird dann das in der ersten Reduktionsstufe 4 reduzierte Signal eingelesen und die weiteren Verfahrensschritte 21 bis 30 werden dann in der nachfolgenden Reduktionsstufe, z. B. 5, erneut durchlaufen. Bei dem dargestellten Ausführungsbeispiel kann die nachfolgende Reduktionsstufe beispielsweise die zweite Reduktionsstufe 5 sein, in der eine Zeitsegmentierung durchgeführt wird. Hierzu werden neue Signaldaten im Zeitbereich in Schritt 23 aus dem reduzierten Signal erzeugt. Nach der letzten Reduktionsstufe 7 wird gemäß dem Pfeil 31 das vollständig reduzierte Signal zur weiteren Analyse einem Analyseabschnitt zur Bestimmung der Modulationsparameter übergeben.

Durch die Verwendung von externen Analyseroutinen 10-12 ist es beispielsweise auch möglich, bei Mehrkanalverfahren die Kanalabstände und Kanalanzahl gezielt zu ermitteln. Durch die entsprechende externe Analyseroutine werden dann die Reduktionsparameter der ersten Reduktionsstufe 4 so ausgewählt, dass lediglich ein bestimmter, geeigneter Kanal den weiteren Reduktionsstufen zugeführt wird. Die Umsetzung erfolgt durch eine Bandpassfilterung des eingelesenen Signals.

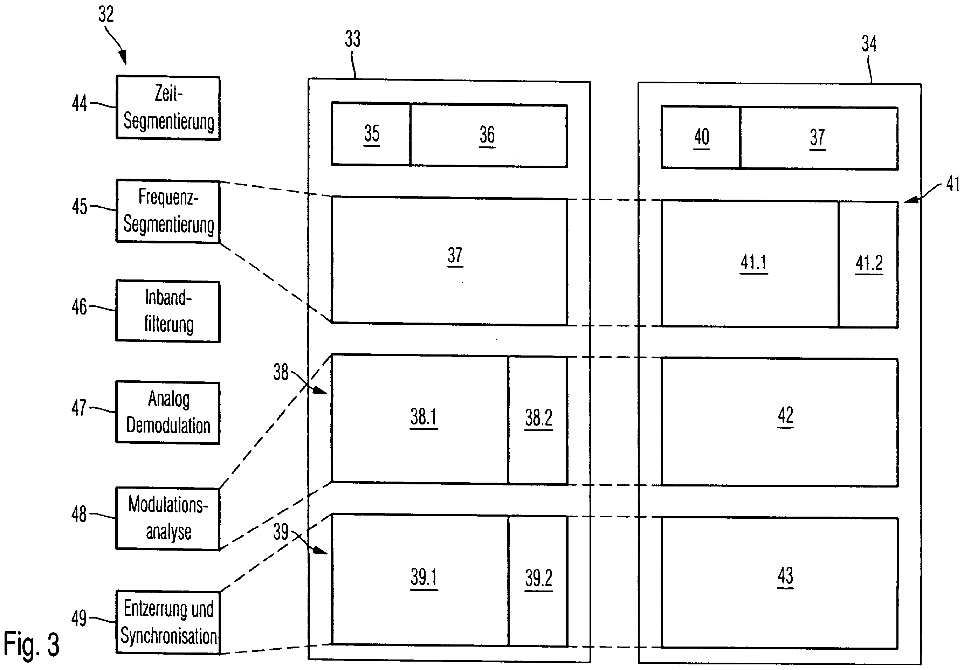

Zur Überprüfung des Ergebnisses bzw. Überwachung des Reduktionsprozesses ist eine graphische Ausgabeeinheit vorgesehen, auf der das Signal vor und nach der jeweiligen Reduktion dargestellt ist. Dies wird nachfolgend noch unter Bezugnahme auf Fig. 3 erläutert.

Zur Überwachung bei der Durchführung der einzelnen Reduktionsstufen 4 bis 7 können die in einem einzelnen Schritt reduzierten Signale bzw. die aus dem Signal erzeugten Signaldaten graphisch auf einer Anzeigevorrichtung ausgegeben werden. Die ausgewählten Reduktionsstufen werden beispielsweise nacheinander dargestellt und gemeinsam mit den nachfolgenden Analysestufen als Ablaufschema 32 dargestellt. Das Ablaufschema 32 enthält in dem dargestellten Ausführungsbeispiel vier Reduktionsstufen 44 bis 47. Im Anschluss an die Reduktionsstufen 44 bis 47 wird eine Modulationsanalyse 48 sowie eine Entzerrung und Synchronisation 49 des ursprünglich eingelesenen Signals durchgeführt.

Um die während des Programmablaufs durchgeführten einzelnen Schritte für einen Benutzer nachvollziehbar zu gestalten, ist ein erstes Bildschirmfenster 33 und ein zweites Bildschirmfenster 34 auf der Darstellungseinrichtung dargestellt. In dem ersten Bildschirmfenster 33 und dem zweiten Bildschirmfenster 34 sind mehrere Bereiche 35 bis 43 dargestellt. So ist in einem ersten Bereich 35 des ersten Bildschirmfensters 33 angegeben, mit Hilfe welcher Analyseroutine 10 bis 12 der entsprechende Reduktionsschritt 4 bis 7 durchgeführt wird. Insbesondere kann bei mehreren Analyseroutinen, welche in Bezug auf dieselbe Reduktionsstufe 4 - 7 anwendbar sind, hier durch eine Benutzereingabe ausgewählt werden, mit welcher der Analyseroutinen die Reduktion durchgeführt werden soll. Die Auswahl erfolgt dann insbesondere durch Expertenwissen gezielt in Bezug auf das zu anlaysierende Signal. Die zugehörigen Ergebnisse werden in dem zweiten Bereich 36 des ersten Bildschirmfensters 33 dargestellt.

In dem dargestellten Ausführungsbeispiel ist der Frequenzsegmentierung 45 ein weiterer Bereich 37 zugeordnet, in dem beispielsweise ein Spektrum dargestellt wird. Das Spektrum wird aus dem zu analysierenden Signal als Signaldaten erzeugt. Dieses in dem weiteren Bereich 37 dargestellte Spektrum bildet folglich die Basis für die externe Analyseroutine bei der Ermittlung der Reduktionsparameter. Zur Verdeutlichung der Reduktion sind in dem dritten Bereich 37 in dem Spektrum vertikale Linien dargestellt, die die Reduktionsparameter in Form von Grenzfrequenzen darstellen. Diese vertikalen Linien können als verschiebbare Cursor ausgeführt sein, wenn durch einen Bediener die externe Analyseroutine ausgeführt wird.

In dem vierten Bereich 38 des ersten Bildschirmfensters 33 ist eine unterteilte Darstellung vorgesehen. Während in einem ersten Abschnitt 38.1 beispielsweise eine Momentanfrequenz dargestellt wird, ist in einem zweiten Abschnitt 38.2 ein Histogramm der Frequenzen darstellbar.

In dem vierten Bereich 39 des ersten Bildschirmfensters 33 ist ebenfalls ein erster Abschnitt 39.1 und ein zweiter Abschnitt 39.2 vorgesehen. Dabei wird vorzugsweise eine Momentanphase in dem ersten Abschnitt 39.1 sowie ebenfalls ein Histogramm 39.2 der Phasen dargestellt.

Entsprechende Darstellungsmöglichkeiten ergeben sich in dem zweiten Bildschirmfenster 34. Dabei ist wiederum ein erster Bereich 40 vorgesehen, in dem die durchzuführenden Reduktionsschritte angegeben sind. Benachbart hierzu ist ein zweiter Bereich 37 dargestellt, in dem die Ergebnisse der externen Analyseroutine dargestellt sind. In dem zweiten Bereich 41 des zweiten Bildschirmfensters 34 ist wiederum ein erster Abschnitt 41.1 und ein zweiter Abschnitt 41.2 vorgesehen. In dem ersten Abschnitt 41.1 wird eine Momentanfrequenz und in dem zweiten Abschnitt 41.2 ein Histogramm der Frequenzen angezeigt.

In dem dritten Bereich des zweiten Bildschirmfensters 34 wird z. B. ein Spektrum des vierten Moments des Basisbandsignals dargestellt, während in dem vierten Bereich 43 z. B. ein Phasenstern angegeben ist. Die jeweils vierten Bereiche 39, 43 dienen der Veranschaulichung des Modulationsanalyseergebnisses und erlauben eine visuelle weitere Auswertung durch einen Benutzer.

Einzelne zugeordnete Bereiche wie die Bereiche 37 - 39 oder 41 - 43 sind für alle oder nur einen Teil der Reduktionsstufen des Ablaufschemas 32 darstellbar.

Mit den den einzelnen Schritten entsprechenden Darstellungen der Signale bzw. der daraus erzeugten Signaldaten wird für den Benutzer eine Überwachung sowohl der Reduktion des Signals als auch der Modulationsanalyse möglich. Ferner kann bei Ausbildung von aktiven Darstellungen wie den Cursor ein Eingreifen ermöglicht werden.

In Abhängigkeit von dem zu analysierenden Signaltyp, der beispielsweise über einen Signaltypeingang 3.3 zuführbar ist, kann anstelle der Modulationsanalyse 48 auch eine Korrelationsanalyse durchgeführt werden. Dies ist insbesondere bei OFDM (Orthogonal Frequency Division Multiplex) oder CDMA (Code Division Multiple Access) Verfahren sinnvoll.

Durch die externe Analyseroutine wird bei einer Zeitsegmentierung als Reduktionsparameter eine Start- und eine Endzeit als Reduktionsspeicher für das zu analysierende Signal angegeben. Die Auswahl der Start- und Endzeit kann dabei in Abhängigkeit von der gewählten Analyseroutine auch solche Signalabschnitte ermitteln, welche in gutes Signal zu Rauschverhältnis aufweisen. Bei gebursteten Signalen wird dagegen jeweils ein durch die Burstgrenzen definierter Zeitabschnitt ausgewählt. Die Signaldaten werden dabei aus den zu analysierenden Daten als Funktion der Zeit als physikalischer Größe erzeugt. So können aus dem zu analysierenden Signal beispielsweise eine Hüllkurve über die Zeit, die Momentanamplitude, ein komplexes Zeitsignal, eine Momentanfrequenz oder ein Spektrogramm erzeugt werden.

In einem weiteren Reduktionsschritt wird eine möglicherweise vorhandene analoge Sekundärmodulation rückgängig gemacht. Eine solche analoge Sekundärmodulation ist der digitalen Modulation überlagert. Das Rückgängigmachen der analogen Modulation erfolgt vorzugsweise nach einer Frequenz- bzw. Zeitsegmentierung. Da eine Veranschaulichung durch graphische Ausgabe in diesem Fall kaum möglich ist, wird vorzugsweise das Signal AM bzw. FM-demoduliert hörbar ausgegeben.

Nachdem die nicht relevanten Signalbestandteile so schrittweise reduziert wurden, wird in dem Analyseabschnitt 15 schließlich eine Modulationsart und/oder mehrere Modulationsparameter bestimmt. Hierzu werden in dem Analyseabschnitt 15 Hüllkurvenspektren und/oder Spektren höherer Momente ermittelt und daraus zunächst eine Symbolrate bestimmt.

Die Durchführung der externen Analyseroutine kann auch durch einen Benutzer erfolgen, der auf Basis der ausgegebenen Signaldaten über die allgemeine Schnittstelle 3.2 Reduktionsparameter vorgibt, die dann über die Schnittstelle 27 eingelesen und dem oder den nachfolgend durchzuführenden Reduktionsschritt(en) zugrunde gelegt werden.

Ebenso ist die Überprüfung des Ergebnisses eines Reduktionsschritts durch einen Benutzer durchführbar, indem das Ergebnis des durchgeführten Reduktionsschritts graphisch ausgegeben wird und durch einen Benutzer ebenfalls über die allgemeine Schnittstelle 3.2 ein Bewertungsergebnis eingegeben wird. Im einfachsten Fall wird hierzu eine "OK"-Schaltfläche betätigt.

Die Erfindung ist nicht auf das dargestellt Ausführungsbeispiel beschränkt. Vielmehr ist auch eine Kombination einzelner Bearbeitungsschritte möglich.

## Patentansprüche

1. Verfahren zur Analyse eines digital modulierten Signals in einer Signalanalysevorrichtung (1) mit einer Reduktionseinheit (2) zur Reduktion nicht relevanter Signalanteile, die zumindest zwei Reduktionsstufen (4, 5, 6, 7) umfasst, mit folgenden Verfahrensschritten:
- Einlesen eines Signals (20) in einer Eingangsschnittstelle (3) der Signalanalysevorrichtung (1),
- Erzeugen von Signaldaten als Funktion einer physikalischen Größe aus dem eingelesenen Signal (23),
- Ausgeben der erzeugten Signaldaten zur externen Analyse (25), und
**gekennzeichnet**
**durch** die Schritte
- Abfragen der Eingangsschnittstelle (3.2) der Signalanalysevorrichtung (1) (27), ob eine externe Analyse durchgeführt wird, und Einlesen von Reduktionsparametern,
wobei die Reduktionsparameter als externe Reduktionsparameter eingelesen werden, wenn eine externe Analyse durchgeführt wird, oder
die Reduktionsparameter als interne Reduktionsparameter eingelesen werden, wenn keine externe Analyse durchgeführt wird (28),
- Durchführen eines Reduktionsschritts auf Basis der eingelesenen Reduktionsparameter (21) zur Erzeugung eines reduzierten Signals,
- Ausgeben des reduzierten Signals für eine Bewertung (29) des reduzierten Signals, und
- Einlesen eines Bewertungsergebnisses in die Reduktionseinheit (2) und Weiterleiten des reduzierten Signals zur Durchführung zumindest eines weiteren Reduktionsschritts (32) oder Wiederholen des Reduktionsschritts (4, 5, 6, 7) mit veränderten Reduktionsparametern in Abhängigkeit des Bewertungsergebnisses.

2. Verfahren nach Anspruch 1,
**dadurch gekennzeichnet,**
**dass** bei mehreren aufeinander folgenden Reduktionsschritten (4, 5, 6, 7) für jeden Schritt Signaldaten als Funktion einer vorgebbaren physikalischen Größe, die sich von der physikalischen Größe des vorangegangenen Schritts unterscheidet, auf Basis des weitergeleiteten reduzierten Signals des vorangegangenen Reduktionsschritts (4, 5, 6, 7) erzeugt werden (23).

3. Verfahren nach Anspruch 1 oder 2,
**dadurch gekennzeichnet,**
**dass** in dem zumindest einen weiteren Reduktionsschritt (4, 5, 6, 7), der auf den Reduktionsschritt (4, 5, 6, 7) folgt, die Signaldaten zur externen Analyse ausgegeben werden (25).

4. Verfahren nach einem der Ansprüche 1 bis 3,
**dadurch gekennzeichnet,**
**dass** die internen Reduktionsparameter für mehrere nacheinander durchzuführende Reduktionsschritte als Parametersatz vorgegeben sind (14).

5. Verfahren nach einem der Ansprüche 1 bis 3,
**dadurch gekennzeichnet,**
**dass** die Reduktionsparameter durch mindestens eine geräteeigene Analyseroutine in einem Analyseblock (9) der Signalanalysevorrichtung (1) aus den im jeweiligen Reduktionsschritt (4, 5, 6, 7) erzeugten Signaldaten ermittelt werden.

6. Verfahren nach einem der Ansprüche 1 bis 5,
**dadurch gekennzeichnet,**
**dass** in einem Auswahlabschnitt (17) der Signalanalysevorrichtung (1) ein Ablaufschema festgelegt wird, in dem mehrere nacheinander durchzuführende Reduktionsschritte in den Reduktionsstufen (4, 5, 6, 7) der Reduktionseinheit (2) in Abhängigkeit von einer Signaltypinformation über das zu analysierende Signal miteinander kombiniertwerden.

7. Verfahren nach Anspruch 6,
**dadurch gekennzeichnet,**
**dass** eine Reihenfolge bei der Durchführung mehrerer Reduktionsschritte (4, 5, 6, 7) in Abhängigkeit von einer Vorverarbeitung des zu analysierenden Signals durch den Auswahlabschnitt (17) geändert wird.

8. Verfahren nach einem der Ansprüche 1 bis 7,
**dadurch gekennzeichnet,**
**dass** in einem Reduktionsschritt eine Frequenzsegmentierung (45) durchgeführt wird.

9. Verfahren nach einem der Ansprüche 1 bis 8,
**dadurch gekennzeichnet,**
**dass** in einem Reduktionsschritt eine Zeitsegmentierung (44) durchgeführt wird.

10. Verfahren nach einem der Ansprüche 1 bis 9,
**dadurch gekennzeichnet,**
**dass** in einem Reduktionsschritt eine Sekundärmodulation (47) rückgängig gemacht wird.

11. Verfahren nach einem der Ansprüche 1 bis 10,
**dadurch gekennzeichnet,**
**dass** das in einem letzten Reduktionsschritt (7) erzeugte reduzierte Signal von der Reduktionseinheit (2) einem Analyseabschnitt (15) der Signalanalysevorrichtung (1) übergeben wird,
wobei der Analyseabschnitt 15 eine Modulationsanalyse oder eine Korrelationsanalyse des übergebenen reduzierten Signals ausführt.

12. Verfahren nach Anspruch 11,
**dadurch gekennzeichnet,**
**dass** durch den Analyseabschnitt (15) eine schrittweise Modulationsparameteranalyse des reduzierten Signals durchgeführt wird.

13. Verfahren nach Anspruch 12,
**dadurch gekennzeichnet,**
**dass** bei der Modulationsparameteranalyse durch jeden Schritt ein Teilergebnis auf Basis von jeweils zumindest einem Analyseparameter ermittelt wird und in Abhängigkeit von dem Teilergebnis eines Schritts der Modulationsparameteranalyse der nachfolgende Schritt ausgewählt und der hierfür erforderliche Analyseparameter festgelegt wird.

14. Verfahren nach Anspruch 11,
**dadurch gekennzeichnet,**
**dass** durch den Analyseabschnitt (15) eine Korrelationsanalyse des reduzierten Signals durchgeführt wird.

15. Verfahren nach Anspruch 14,
**dadurch gekennzeichnet,**
**dass** zur Durchführung der Korrelationsanalyse in dem Analyseabschnitt (15) Spektren höherer Momente ermittelt werden.

16. Digitales Speichermedium mit elektronisch auslesbaren Steuersignalen, die so mit einem programmierbaren Computer oder digitalen Signalprozessor zusammenwirken können, dass das Verfahren nach einem der Ansprüche 1 bis 15 ausgeführt wird.

17. Computerprogramm mit Programmcode-Mitteln, um alle Schritte gemäß einem der Ansprüche 1 bis 15 durchführen zu können, wenn das Programm auf einem Computer oder einem digitalen Signalprozessor ausgeführt wird.

18. Computerprogramm mit Programmcode-Mitteln, um alle Schritte gemäß einem der Ansprüche 1 bis 15 durchführen zu können, wenn das Programm auf einem maschinenlesbaren Datenträger gespeichert ist.

19. Computerprogramm-Produkt mit auf einem maschinenlesbaren Datenträger gespeicherten Programmcode-Mitteln, um alle Schritte gemäß einem der Ansprüche 1 bis 15 durchführen zu können, wenn das Programm auf einem Computer oder einem digitalen Signalprozessor ausgeführt wird.

20. Signalanalysevorrichtung zur Analyse eines digital modulierten Signals, mit
einem Signaleingang (3.1) zum Einlesen eines Signals und mit einer mit dem Signaleingang (3.1) verbundenen Reduktionseinheit (2) zur Reduktion nicht relevanter Signalanteile, die zumindest zwei Reduktionsstufen (4, 5, 6, 7) umfasst, und mit
zumindest einer Schnittstelle (25, 27, 13), über die in einer Reduktionsstufe (4, 5, 6, 7) der zumindest zwei Reduktionsstufen (4, 5, 6, 7) aus dem Signal erzeugte Signaldaten als Funktion einer physikalischen Größe zur externen Analyse ausgebbar und externe Reduktionsparameter einlesbar sind, wobei Reduktionsparameter als externe Reduktionsparameter eingelesen werden, wenn eine externe Analyse durchgeführt wird, oder als interne Reduktionsparameter eingelesen werden, wenn keine externe Analyse durchgeführt wird, wobei die Reduktionsstufe (4, 5, 6, 7) so eingerichtet ist, dass das Signal auf Basis der eingelesenen Reduktionsparameter reduziert und zur Bewertung ausgegeben wird, und mit einer Weiterleitungsentscheidungsvorrichtung, durch die das reduzierte Signal in Abhängigkeit von einem Bewertungsergebnis einer weiteren Reduktionsstufe (4, 5, 6, 7) zuführbar ist oder durch die eine Wiederholung des Reduktionsschritts (4, 5, 6, 7) mit veränderten Reduktionsparametern veranlasst wird.

21. Signalanalysevorrichtung nach Anspruch 20, **dadurch gekennzeichnet,**
**dass** die Reduktionseinheit (2) zum Einlesen interner Reduktionsparameter mit einem Speicher (8) verbunden ist, in dem ein Satz von Reduktionsparametern zur Durchführung mehrerer Reduktionsschritte nacheinander gespeichert ist.

22. Signalanalysevorrichtung nach Anspruch 20 oder 21,
**dadurch gekennzeichnet,**
**dass** die Reduktionsstufe (4, 5, 6, 7) einen Ermittlungsabschnitt aufweist, durch den auf Basis der Signaldaten interne Reduktionsparameter ermittelbar sind.

23. Signalanalysevorrichtung nach einem der Ansprüche 20 bis 22,
**dadurch gekennzeichnet,**
**dass** die Signalanalysevorrichtung einen Auswahlabschnitt (17) aufweist, durch den mehrere der in der Reduktionseinheit (2) vorhandenen Reduktionsstufen (4, 5, 6, 7) miteinander kombinierbar sind und ein Ablaufschema (32) festlegbar ist.

24. Signalanalysevorrichtung nach Anspruch 23,
**dadurch gekennzeichnet,**
**dass** der Auswahlabschnitt (17) mit einem Signalinformationseingang (3.3) verbunden ist.

25. Signalanalysevorrichtung nach einem der Ansprüche 20 bis 24,
**dadurch gekennzeichnet,**
**dass** durch eine der Reduktionsstufen (4, 5, 6, 7) eine Frequenzsegmentierung durchführbar ist.

26. Signalanalysevorrichtung nach einem der Ansprüche 20 bis 25,
**dadurch gekennzeichnet,**
**dass** durch eine der Reduktionsstufen (4, 5, 6, 7) eine Zeitsegmentierung durchführbar ist.

27. Signalanalysevorrichtung nach einem der Ansprüche 20 bis 26,
**dadurch gekennzeichnet,**
**dass** durch eine der Reduktionsstufen (4, 5, 6, 7) eine Sekundärmodulation rückgängig zu machen ist.

28. Signalanalysevorrichtung nach einem der Ansprüche 20 bis 27,
**dadurch gekennzeichnet,**
**dass** die Reduktionseinheit (2) mit einem Analyseabschnitt (15) verbunden ist,
**dass** eine letzte Reduktionsstufe (4, 5, 6, 7) eingerichtet ist, das erzeugte reduzierte Signal von der Reduktionseinheit (2) an den Analyseabschnitt (15) zu übergeben,
**dass** der Analyseabschnitt (15) eingerichtet ist, eine Modulationsanalyse oder eine Korrelationsanalyse des übergebenen reduzierten Signals auszuführen.

29. Signalanalysevorrichtung nach Anspruch 28,
**dadurch gekennzeichnet,**
**dass** durch den Analyseabschnitt (15) eine Modulationsparameteranalyse durchführbar ist, wobei mehrere Analyseschritte nacheinander durchführbar sind und die nachfolgenden Analyseschritte jeweils in Abhängigkeit von in einem vorangegangenen Analyseschritt ermittelten Teilergebnissen festgelegt werden.

30. Signalanalysevorrichtung nach Anspruch 28,
**dadurch gekennzeichnet,**
**dass** durch den Analyseabschnitt (15) eine Korrelationsanalyse durchführbar ist und durch den Analyseabschnitt zumindest ein Spektrum höheren Moments berechenbar ist.

## Claims

1. Method for analysis of a digitally modulated signal in a signal analysis device (1) with a reduction unit (2) for reduction of irrelevant signal components which comprises at least two reduction stages (4, 5, 6, 7), with the following method steps:
- inputting of a signal (20) in an input interface (3) of the signal analysis device (1),
- generation of signal data as a function of a physical value from the inputted signal (23),
- outputting of the generated signal data for external analysis (25), and **characterised by** the steps
- interrogation of the input interface (3.2) of the signal analysis device (1) (27) to determine whether an external analysis is being carried out, and inputting of reduction parameters,
wherein the reduction parameters are inputted as external reduction parameters when an external analysis is being carried out, or
the reduction parameters are inputted as internal reduction parameters when an external analysis is not being carried out (28),
- execution of a reduction step on the basis of the inputted reduction parameters (21) for generation of a reduced signal,
- outputting of the reduced signal for evaluation (29) of the reduced signal, and
- inputting of an evaluation result into the reduction unit (2) and transmission of the reduced signal for execution of at least one further reduction step (32) or repetition of the reduction step (4, 5, 6, 7) with changed reduction parameters dependent on the evaluation result.

2. Method according to claim 1,
**characterised in that**
with a plurality of successive reduction steps (4, 5, 6, 7) signal data are generated for each step as a function of a predeterminable physical value which differs from the physical value of the preceding step, on the basis of the transmitted reduced signal of the preceding reduction step (4, 5, 6, 7) (23).

3. Method according to claim 1 or 2,
**characterised in that**
in the at least one further reduction step (4, 5, 6, 7) which follows the reduction step (4, 5, 6, 7), the signal data are outputted for external analysis (25).

4. Method according to one of claims 1 to 3,
**characterised in that**
the internal reduction parameters for a plurality of reduction steps to be executed one after another are predetermined as a set of parameters (14).

5. Method according to one of claims 1 to 3,
**characterised in that**
the reduction parameters are determined from the signal data generated in the particular reduction step (4, 5, 6, 7) by at least one analysis routine specific to the device in an analysis block (9) of the signal analysis device (1).

6. Method according to one of claims 1 to 5,
**characterised in that**
in a selection section (17) of the signal analysis device (1) a sequence of operations is defined in which a plurality of reduction steps to be executed one after another are combined with one another in the reduction stages (4, 5, 6, 7) of the reduction unit (2) dependent on signal type information about the signal to be analysed.

7. Method according to claim 6,
**characterised in that**
a sequence in the execution of a plurality of reduction steps (4, 5, 6, 7) is changed dependent on previous processing of the signal to be analysed by the selection section (17).

8. Method according to one of claims 1 to 7,
**characterised in that**
frequency segmentation (45) is executed in a reduction step.

9. Method according to one of claims 1 to 8,
**characterised in that**
time segmentation (44) is executed in a reduction step.

10. Method according to one of claims 1 to 9,
**characterised in that**
secondary modulation (47) is reversed in a reduction step.

11. Method according to one of claims 1 to 10,
**characterised in that**
the reduced signal generated in a last reduction step (7) is transferred by the reduction unit (2) to an analysis section (15) of the signal analysis device (1), wherein the analysis section (15) executes modulation analysis or correlation analysis of the transferred reduced signal.

12. Method according to claim 11,
**characterised in that**
step by step modulation parameter analysis of the reduced signal is executed by the analysis section (15).

13. Method according to claim 12,
**characterised in that**
during the modulation parameter analysis a part result is determined by each step on the basis of at least one analysis parameter in each case and depending on the part result of a step of the modulation parameter analysis the following step is selected and the analysis parameter required for this is established.

14. Method according to claim 11,
**characterised in that**
correlation analysis of the reduced signal is executed by the analysis section (15).

15. Method according to claim 14,
**characterised in that**
spectra of higher moments are determined to execute the correlation analysis in the analysis section (15).

16. Digital storage medium with control signals which can be read out electronically and are able to interact with a programmable computer or digital signal processor so that the method according to one of claims 1 to 15 is implemented.

17. Computer programme with programme code means to be able to carry out all the steps according to one of claims 1 to 15 when the programme is implemented on a computer or a digital signal processor.

18. Computer programme with programme code means to be able to carry out all the steps according to one of claims 1 to 15 when the programme is stored on a machine-readable data storage medium.

19. Computer programme product with programme code means stored on a machine-readable data storage medium to be able to carry out all the steps according to one of claims 1 to 15 when the programme is implemented on a computer or a digital signal processor.

20. Signal analysis device for analysis of a digitally modulated signal, with
a signal input (3.1) for inputting of a signal, and with
a reduction unit (2) connected with the signal input (3.1) for reduction of irrelevant signal components, which comprises at least two reduction stages (4, 5, 6, 7), and with
at least one interface (25, 27, 13) through which signal data generated from the signal can be outputted in a reduction stage (4, 5, 6, 7) of the at least two reduction stages (4, 5, 6, 7) as a function of a physical value for external analysis and external reduction parameters can be inputted,
wherein reduction parameters are inputted as external reduction parameters when an external analysis is being carried out, or are inputted as internal reduction parameters when an external analysis is not being carried out,
wherein the reduction stage (4, 5, 6, 7) is configured so that the signal is reduced on the basis of the inputted reduction parameters and outputted for evaluation, and with a transmission deciding device through which the reduced signal can be fed to a further reduction stage (4, 5, 6, 7) dependent on an evaluation result or through which a repetition of the reduction step (4, 5, 6, 7) with changed reduction parameters is ordered.

21. Signal analysis device according to claim 20,
**characterised in that**
the reduction unit (2) for inputting internal reduction parameters is connected with a storage unit (8) in which a set of reduction parameters is stored for execution of a plurality of reduction steps one after another.

22. Signal analysis device according to claim 20 or 21,
**characterised in that**
the reduction stage (4, 5, 6, 7) has a determining section through which internal reduction parameters can be determined on the basis of the signal data.

23. Signal analysis device according to one of claims 20 to 22,
**characterised in that**
the signal analysis device has a selection section (17) through which a plurality of the reduction stages (4, 5, 6, 7) present in the reduction unit (2) can be combined with one another and a sequence of operations (32) can be defined.

24. Signal analysis device according to claim 23,
**characterised in that**
the selection section (17) is connected with a signal information input (3.3).

25. Signal analysis device according to one of claims 20 to 24,
**characterised in that**
frequency segmentation can be executed by one of the reduction stages (4, 5, 6, 7).

26. Signal analysis device according to one of claims 20 to 25,
**characterised in that**
time segmentation can be executed by one of the reduction stages (4, 5, 6, 7).

27. Signal analysis device according to one of claims 20 to 26,
**characterised in that**
secondary modulation can be reversed by one of the reduction stages (4, 5, 6, 7).

28. Signal analysis device according to one of claims 20 to 27,
**characterised in that**
the reduction unit (2) is connected with an analysis section (15),
**in that** a last reduction stage (4, 5, 6, 7) is configured to transfer the generated reduced signal from the reduction unit (2) to the analysis section (15),
**in that** the analysis section (15) is configured to execute modulation analysis or correlation analysis of the transferred reduced signal.

29. Signal analysis device according to claim 28,
**characterised in that**
modulation parameter analysis can be executed by the analysis section (15), wherein a plurality of analysis steps can be executed one after another and the following analysis steps are in each case defined dependent on part results determined in a preceding analysis step.

30. Signal analysis device according to claim 28,
**characterised in that**
correlation analysis can be executed by the analysis section (15) and at least one spectrum of higher moment can be calculated by the analysis section.

## Revendications

1. Procédé d'analyse d'un signal modulé numériquement dans un dispositif d'analyse de signal (1) comprenant une unité de réduction (2) pour la réduction de composantes de signal non pertinentes, qui comporte au moins deux étages de réduction (4, 5, 6, 7), comprenant les étapes de procédé suivantes :
- la lecture d'un signal (20) dans une interface d'entrée (3) du dispositif d'analyse de signal (1),
- la génération de données de signal en fonction d'une grandeur physique à partir du signal (23) lu,
- la sortie des données de signal générées aux fins d'une analyse externe (25), et **caractérisé**
**par** les étapes
- d'interrogation de l'interface d'entrée (3,2) du dispositif d'analyse de signal (1) (27), afin de savoir si une analyse externe est réalisée, et de lecture des paramètres de réduction,
dans lequel les paramètres de réduction sont lus en tant que paramètres de réduction externes, lorsqu'une analyse externe est réalisée, ou
les paramètres de réduction sont lus en tant que paramètres de réduction internes, lorsqu'aucune analyse externe n'est réalisée (28),
- de réalisation d'une étape de réduction sur la base des paramètres de réduction (21) lus pour générer un signal réduit,
- d'émission du signal réduit pour une évaluation (29) du signal réduit, et
- de lecture d'un résultat d'évaluation dans l'unité de réduction (2) et de transmission du signal réduit pour la réalisation d'au moins une autre étape de réduction (32) ou la répétition de l'étape de réduction (4, 5, 6, 7) avec des paramètres de réduction modifiés en fonction du résultat de l'évaluation.

2. Procédé selon la revendication 1,
**caractérisé**
**en ce que** lorsque plusieurs étapes de réduction (4, 5, 6, 7) se succèdent, des données de signal sont générées (23) pour chaque étape en fonction d'une grandeur physique pouvant être prédéfinie, qui se différencie de la grandeur physique de l'étape précédente, sur la base du signal réduit transmis de l'étape de réduction (4, 5, 6, 7) précédente.

3. Procédé selon la revendication 1 ou 2,
**caractérisé**
**en ce qu'**au cours de la au moins une autre étape de réduction (4, 5, 6, 7) qui suit l'étape de réduction (4, 5, 6, 7), les données de signal sont sorties (25) aux fins d'analyse externe.

4. Procédé selon l'une quelconque des revendications 1 à 3,
**caractérisé**
**en ce que** les paramètres de réduction internes pour plusieurs étapes de réduction à réaliser les unes après les autres sont prédéfinis (14) comme jeu de paramètres.

5. Procédé selon l'une quelconque des revendications 1 à 3,
**caractérisé**
**en ce que** les paramètres de réduction sont déterminés par au moins une routine d'analyse propre à l'appareil dans un bloc d'analyse (9) du dispositif d'analyse de signal (1) à partir des données de signal générées au cours de l'étape de réduction (4, 5, 6, 7) respective.

6. Procédé selon l'une quelconque des revendications 1 à 5,
**caractérisé**
**en ce que**, dans une partie de sélection (17) du dispositif d'analyse de signal (1), un organigramme est établi, dans lequel plusieurs étapes de réduction destinées à être réalisées les unes après les autres sont combinées les unes aux autres dans les étages de réduction (4, 5, 6, 7) de l'unité de réduction (2) en fonction d'une information de type signal par l'intermédiaire du signal à analyser.

7. Procédé selon la revendication 6,
**caractérisé**
**en ce qu'**un ordre, lors de la réalisation de plusieurs étapes de réduction (4, 5, 6, 7)est modifié par la partie de sélection (17) en fonction d'un prétraitement du signal à analyser.

8. Procédé selon l'une quelconque des revendications 1 à 7,
**caractérisé**
**en ce qu'**une segmentation de fréquence (45) est réalisée au cours d'une étape de réduction.

9. Procédé selon l'une quelconque des revendications 1 à 8,
**caractérisé**
**en ce qu'**une segmentation temporelle (44) est réalisée au cours d'une étape de réduction.

10. Procédé selon l'une quelconque des revendications 1 à 9,
**caractérisé**
**en ce qu'**une modulation secondaire (47) est annulée au cours d'une étape de réduction.

11. Procédé selon l'une quelconque des revendications 1 à 10,
**caractérisé**
**en ce que** le signal réduit généré au cours d'une dernière étape de réduction (7) est transféré de l'unité de réduction (2) à une partie d'analyse (15) du dispositif d'analyse de signal (1),
dans lequel la partie d'analyse (15) réalise une analyse de modulation ou une analyse de corrélation du signal réduit transféré.

12. Procédé selon la revendication 11,
**caractérisé**
**en ce qu'**une analyse étape par étape des paramètres de modulation du signal réduit est réalisée par la partie d'analyse (15).

13. Procédé selon la revendication 12,
**caractérisé**
**en ce que** lors de l'analyse des paramètres de modulation, à travers chaque étape, un résultat partiel est déterminé sur la base de respectivement au moins un paramètre d'analyse et, en fonction du résultat partiel d'une étape de l'analyse des paramètres de modulation, l'étape suivante est sélectionnée et le paramètre d'analyse nécessaire à cela est établi.

14. Procédé selon la revendication 11,
**caractérisé**
**en ce qu'**une analyse de corrélation du signal réduit est réalisée par la partie d'analyse (15).

15. Procédé selon la revendication 14,
**caractérisé**
**en ce que**, pour la réalisation de l'analyse de corrélation dans la partie d'analyse (15) des spectres de moments plus élevés sont déterminés.

16. Support d'enregistrement numérique comprenant des signaux de commande pouvant être lus par voie électronique, qui peuvent coopérer avec un ordinateur programmable ou un processeur de signal numérique, de sorte que le procédé selon l'une quelconque des revendications 1 à 15 est mis en oeuvre.

17. Produit-programme informatique comprenant des moyens de code de programme, afin de pouvoir réaliser toutes les étapes selon l'une quelconque des revendications 1 à 15, lorsque le programme est exécuté sur un ordinateur ou un processeur de signal numérique.

18. Produit-programme informatique comprenant des moyens de code de programme, afin de pouvoir réaliser toutes les étapes selon l'une quelconque des revendications 1 à 15, lorsque le programme est mis en mémoire sur un support de données lisible par une machine.

19. Produit-programme informatique comprenant des moyens de code de programme mis en mémoire sur un support de données lisible par machine, afin de pouvoir réaliser toutes les étapes selon l'une quelconque des revendications 1 à 15, lorsque le programme est exécuté sur un ordinateur ou un processeur de signal numérique.

20. Dispositif d'analyse de signal pour l'analyse d'un signal modulé numériquement, comprenant
une entrée de signal (3,1) pour la lecture d'un signal et
comprenant une unité de réduction (2) reliée à l'entrée de signal (3.1) pour la réduction de composantes de signal non pertinentes, qui comporte au moins deux étages de réduction (4, 5, 6, 7), et comprenant
au moins une interface (25, 27, 13), par l'intermédiaire de laquelle les données de signal générées à partir du signal peuvent être sorties aux fins d'analyse externe en fonction d'une grandeur physique et des paramètres de réduction externes peuvent être lus, dans un étage de réduction (4, 5, 6, 7) des au moins deux étages de réduction (4, 5, 6, 7),
dans lequel les paramètres de réduction sont lus en tant que paramètres de réduction externes, lorsqu'une analyse externe est réalisée, ou sont lus en tant que paramètres de réduction internes, lorsqu'aucune analyse externe n'est réalisée,
dans lequel l'étage de réduction (4, 5, 6, 7) est conçu de sorte que le signal est réduit sur la base des paramètres de réduction lus et est émis aux fins d'évaluation, et comprenant
un dispositif de décision de transmission, par l'intermédiaire duquel le signal réduit peut être amené à un autre étage de réduction (4, 5, 6, 7) en fonction d'un résultat d'évaluation ou par l'intermédiaire duquel une répétition de l'étape de réduction (4, 5, 6, 7) avec les paramètres de réduction modifiés est déclenchée.

21. Dispositif d'analyse de signal selon la revendication 20,
**caractérisé**
**en ce que** l'unité de réduction (2) pour la lecture des paramètres de réduction internes, est reliée à une mémoire (8), dans laquelle un groupe de paramètres de réduction est mis en mémoire pour la réalisation de plusieurs étapes de réduction les unes après les autres.

22. Dispositif d'analyse de signal selon la revendication 20 ou 21,
**caractérisé**
**en ce que** l'étage de réduction (4, 5, 6, 7) comprend une partie de détermination, par l'intermédiaire de laquelle des paramètres de réduction internes peuvent être déterminés sur la base des données de signal.

23. Dispositif d'analyse de signal selon l'une quelconque des revendications 20 à 22,
**caractérisé**
**en ce que** le dispositif d'analyse de signal comprend une partie de sélection (17), par l'intermédiaire de laquelle plusieurs étages de réduction (4, 5, 6, 7) présents dans l'unité de réduction (2) peuvent être combinés les uns aux autres et un organigramme (32) peut être établi.

24. Dispositif d'analyse de signal selon la revendication 23,
**caractérisé**
**en ce que** la partie de sélection (17) est reliée à une entrée d'information de signal (3,3).

25. Dispositif d'analyse de signal selon l'une quelconque des revendications 20 à 24,
**caractérisé**
**en ce qu'**une segmentation de fréquence peut être réalisée par un des étages de réduction (4, 5, 6, 7).

26. Dispositif d'analyse de signal selon l'une quelconque des revendications 20 à 25,
**caractérisé**
**en ce qu'**une segmentation temporelle peut être réalisée par un des étages de réduction (4, 5, 6, 7).

27. Dispositif d'analyse de signal selon l'une quelconque des revendications 20 à 26,
**caractérisé**
**en ce qu'**une modulation secondaire peut être annulée par un des étages de réduction (4, 5, 6, 7).

28. Dispositif d'analyse de signal selon l'une quelconque des revendications 20 à 27,
**caractérisé**
**en ce que** l'unité de réduction (2) est reliée à une partie d'analyse (15),
**en ce qu'**un dernier étage de réduction (4, 5, 6, 7) est conçu pour transférer le signal réduit généré de l'unité de réduction (2) à la partie d'analyse (15),
**en ce que** la partie d'analyse (15) est conçue pour réaliser une analyse de modulation ou une analyse de corrélation du signal réduit transféré.

29. Dispositif d'analyse de signal selon la revendication 28,
**caractérisé**
**en ce qu'**une analyse des paramètres de modulation peut être réalisée par la partie d'analyse (15), dans lequel plusieurs étapes d'analyse peuvent être réalisées les unes après les autres et les étapes d'analyse suivantes sont établies respectivement en fonction des résultats partiels déterminés au cours d'une étape d'analyse précédente.

30. Dispositif d'analyse de signal selon la revendication 28,
**caractérisé**
**en ce qu'**une analyse de corrélation peut être réalisée par la partie d'analyse (15) et au moins un spectre d'un moment plus élevé peut être calculé par la partie d'analyse.
